# EUROPÄISCHE PATENTSCHRIFT

(11) **EP 4 090 874 B1**
(45) Veröffentlichungstag und Bekanntmachung des Hinweises auf die Patenterteilung: **16.07.2025**
(21) Anmeldenummer: 21711745.6
(22) Anmeldetag: 24.02.2021
(51) Int. Cl.: F16L 55/32, F16L 55/40, F16L 101/12, F16L 101/30

(54) **INSPEKTIONSEINRICHTUNG**
INSPECTION EQUIPMENT
ÉQUIPEMENT D'INSPECTION

(30) Priorität: 18.03.2020 DE 102020203453
(43) Veröffentlichungstag der Anmeldung: 23.11.2022
(73) Patentinhaber: Siemens Energy Global GmbH & Co. KG, 81739 München (DE)
(72) Erfinder: NICKL, Matthias, 91056 Erlangen (DE)
(86) Internationale Anmeldenummer: PCT/EP2021/054571
(87) Internationale Veröffentlichungsnummer: WO 2021/185543

(56) Entgegenhaltungen:
- WO-A1-2018/193432
- CN-U- 207 298 218
- KR-B1- 101 359 559
- US-A- 5 142 989
- US-A1- 2002 190 682
- US-A1- 2006 011 397
- US-A1- 2019 120 418

## Beschreibung

Die Erfindung betrifft eine Inspektionseinrichtung, die zum Inspizieren von für den Menschen unzugänglichen Bereichen von Maschinen und/oder Anlagekomponenten und/oder Rohrleitungssystemen ausgelegt ist.

Inspektionseinrichtungen der eingangs genannten Art sind im Stand der Technik in unterschiedlichen Ausgestaltungen bekannt, beispielsweise in Form von Videoendoskopiegeräten, bei denen eine Videooptik unter Verwendung von glasfaserverstärkten Schubstangen in eine zu inspizierende Rohrleitung oder in andere schwer zugängliche Geometrien geschoben wird. Der Einsatz solcher Videoendoskopiegeräte ist allerdings nur in Geometrien oder Rohrleitungssystemen möglich, die sich nicht mehrfach verzweigen. Auch sind Richtungsänderungen bei der sogenannten Befahrung von Rohrleitungen und anderen Geometrien nur begrenzt möglich. So lassen sich beispielsweise keine Vertikal-Horizontal-Richtungsänderungen realisieren. Entsprechend ist die Einsetzbarkeit solcher Videoendoskopiegeräte stark eingeschränkt. Ferner sind Inspektionseinrichtungen in Form von ferngesteuerten Inspektionsdrohnen bekannt, die kabelgebunden oder kabellos ausgeführt sein können und über angetriebene Räder, Ketten oder dergleichen verfügen. Aber auch die dem Anmelder bekannten Bauarten solcher Inspektionsdrohnen erlauben keine Vertikal-Horizontal-Richtungs-änderungen.

Die CN 207 298 218 U offenbart ein Roboter, dessen Glieder vier Räder aufweisen, die angetrieben werden.

Die US 2019120418 A1 offenbart eine Inspektionseinrichtung, die zum Inspizieren von für den Menschen unzugänglichen Bereichen von Maschinen und/oder Anlagekomponenten ausgelegt ist, umfassend zumindest drei aufeinanderfolgende Glieder, die jeweils über zumindest eine Gelenkverbindung aneinander befestigt sind, wobei jedes Glied mit zumindest zwei Rädern vorgesehen sind, welche die Räder von zumindest zwei Gliedern drehend antreiben.

Ausgehend von diesem Stand der Technik ist es eine Aufgabe der vorliegenden Erfindung, eine Inspektionseinrichtung mit alternativem Aufbau zu schaffen, welche die zuvor beschriebenen Probleme zumindest teilweise behebt.

Zur Lösung dieser Aufgabe schafft die vorliegende Erfindung eine Inspektionseinrichtung, die zum Inspizieren von für den Menschen unzugänglichen Bereichen von Maschinen und/oder Anlagekomponenten und/oder Rohrleitungssystemen ausgelegt ist, umfassend zumindest drei aufeinanderfolgende Glieder, die jeweils über zumindest eine Gelenkverbindung aneinander befestigt sind, wobei jedes Glied mit zumindest zwei Rädern versehen ist, Antriebe vorgesehen sind, welche die Räder von zumindest zwei Gliedern drehend antreiben, und zumindest ein Glied wenigstens eine Inspektionstechnik aufweist.

Durch die Unterteilung der Inspektionseinrichtung in mehrere gelenkig miteinander verbundenen Glieder wird eine raupenartige Inspektionsdrohne geschaffen, die in Abhängigkeit von der Art, der Beschaffenheit und der Positionierung der Gelenkverbindungen sehr flexibel ist und auch Vertikal-Horizontal-Richtungsänderungen bewältigen kann. Damit ist die erfindungsgemäße Inspektionseinrichtung sehr flexibel einsetzbar. Darüber hinaus kann die erfindungsgemäße Inspektionseinrichtung Dank dieser Unterteilung vergleichsweise schmal ausgeführt werden, so dass sie sich beispielsweise auch zum Inspizieren sehr enger Rohrsysteme einsetzen lässt. Bevorzugt weist die Inspektionseinrichtung mehr als drei Glieder auf, wodurch mehr Platz zur Unterbringung der Inspektionstechnik geschaffen wird. Auch kann sich eine höhere Anzahl von Gliedern positiv bei der Durchführung von Richtungsänderungen auswirken.

Bevorzugt handelt es sich bei den Gelenkverbindungen um Kugelgelenke, wodurch eine besonders gute Beweglichkeit zwischen den einzelnen Gliedern erzielt wird.

Gemäß der vorliegenden Erfindung ist die Bewegungsrichtung zumindest des ersten Glieds und des letzten Glieds steuerbar, beispielsweise durch Anordnung einer entsprechenden Lenkeinrichtung. Entsprechend kann aktiv auf die Bewegungsrichtung bzw. auf Änderungen der Bewegungsrichtung Einfluss genommen werden.

Es handelt sich bei den Antrieben um elektrische Nabenantriebe, welche die angetriebenen Räder direkt antreiben. In diesem Fall kann auf eine herkömmliche Lenkeinrichtung verzichtet werden. Richtungsänderungen werden dann dadurch bewirkt, dass ein Rad mit einer Drehzahl angetrieben wird, die sich von der Drehzahl unterscheidet, mit der das gegenüberliegende Rad angetrieben wird. Im Ergebnis wird der Inspektionseinrichtung somit eine maximale Wendigkeit verliehen.

Erfindungsgemäß sind Räder, bevorzugt sämtliche Räder, an ihrer Außenumfangsfläche mit Magneten versehen sind, die insbesondere umfänglich gleichmäßig verteilt angeordnet sind. Dies führt dazu, dass die Räder an magnetischen Untergründen anhaften. Durch geeignete Wahl der Anzahl und Stärke der Magneten wird der Inspektionseinrichtung bei magnetischem Untergrund eine vertikale Steigfähigkeit und/oder die Fähigkeit verliehen, sich über Kopf fortzubewegen.

Bei den Magneten handelt es sich bevorzugt um Permanentmagnete, insbesondere Neodymmagnete, und/oder um Elektromagnete. Elektromagneten haben gegenüber Permanentmagneten den Vorteil, dass sich die magnetische Anziehungskraft in vorgegebenen Grenzen frei einstellen lässt. Entsprechend kann in Abhängigkeit von der Beschaffenheit des Untergrunds stets sichergestellt werden, dass der Vortrieb der Inspektionseinrichtung nicht durch zu hohe Anziehungskräfte behindert wird.

Bevorzugt sind die Räder, insbesondere sämtliche Räder, an ihrer Außenumfangsfläche mit einer silikonbasierten Haftfilmbeschichtung versehen, die eine mikrostrukturelle Oberfläche aufweist. Hierdurch wird, im Wesentlichen durch Van-der-Waals-Anziehungskräfte, eine hohe, aber nicht permanente Haftung der Ränder auch bei nicht magnetischen Untergründen erzielt. Dies ermöglicht den Betrieb der Inspektionseinrichtung mit maximaler Steigfähigkeit auch auf nicht magnetischen Untergründen.

Gemäß einer Ausgestaltung der vorliegenden Erfindung weist die wenigstens eine Inspektionstechnik eine Kamera, ein Mikroskop, einen Ultraschallmesskopf, einen Wirbelstrommesskopf oder Kombinationen von diesen auf. Entsprechend lassen sich unterschiedlichste Inspektionen durchführen.

Bevorzugt weist zumindest ein Glied wenigstens eine Reinigungseinrichtung auf, beispielsweise in Form einer Dosiereinrichtung, mit der eine Reinigungslösung gezielt abgegeben werden kann. Entsprechend lassen sich mit der Inspektionseinrichtung auch Bereiche von Maschinen und/oder Anlagekomponenten und/oder Rohrleitungssystemen, die es zu inspizieren gilt, reinigen.

Gemäß einer Ausgestaltung der vorliegenden Erfindung weist zumindest ein Glied wenigstens eine Reparatur- und/oder Bearbeitungseinrichtung auf, beispielsweise in Form einer Klebemitteldosiereinheit, eines Miniaturfräskopfes zur Entnahme von Materialproben, Oberflächenanschliffen oder dergleichen.

Bevorzugt weisen die einzelnen Glieder eine kugelartige Form auf.

Weitere Merkmale und Vorteile der vorliegenden Erfindung werden anhand der nachfolgenden Beschreibung einer Inspektionseinrichtung gemäß einer Ausführungsform der vorliegenden Erfindung unter Bezugnahme auf die beiliegende Zeichnung deutlich. Darin ist
Figur 1 eine schematische Seitenansicht einer Inspektionseinrichtung gemäß einer Ausführungsform der vorliegenden Erfindung;
Figur 2 eine schematische Draufsicht auf die in Figur 1 gezeigte Inspektionseinrichtung und
Figur 3 eine schematische Querschnittansicht eines Rohrleitungsabschnitts eines Rohrleitungssystems, in den die in den Figuren 1 und 2 dargestellte Inspektionseinrichtung zwecks Inspizierung des Rohrleitungssystems eingesetzt ist.

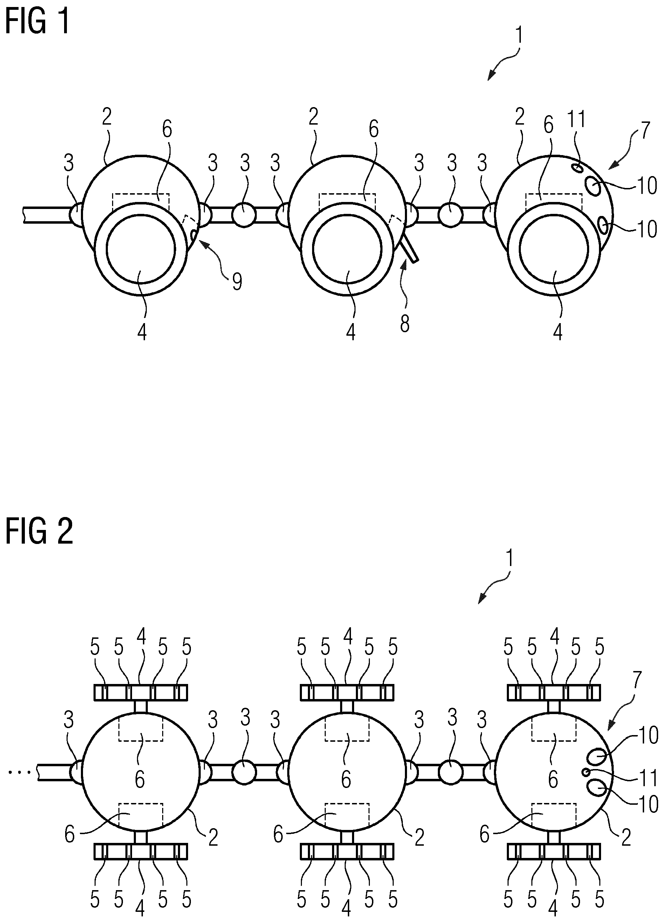

Die Figuren 1 und 2 zeigen eine Inspektionseinrichtung 1 gemäß einer Ausführungsform der vorliegenden Erfindung, die dazu ausgelegt ist, für den Menschen unzugängliche Bereiche von Maschinen und/oder Anlagekomponenten und/oder Rohrleitungssystemen zu inspizieren. Die Inspektionseinrichtung umfasst mehrere aufeinanderfolgende Glieder 2, von denen in den Figuren 1 und 2 nur drei Glieder 2 dargestellt sind. Die einzelnen Glieder 2, die vorliegend im Wesentlichen kugelförmig ausgebildet sind, sind jeweils über Gelenkverbindungen 3 aneinander befestigt. Die Gelenkverbindungen sind jeweils als Kugelgelenke ausgebildet, um eine möglichst hohe Bewegungsfreiheit zwischen den Gliedern 2 zu gewährleisten, wobei grundsätzlich auch andere Gelenkverbindungen eingesetzt werden können. Jedes Glied 2 ist mit zwei Rädern 4 versehen, die an ihrer Außenumfangsfläche mit umfänglich gleichmäßig verteilt angeordneten Magneten 5 versehen sind. Bei den Magneten 5 handelt es sich um Permanentmagnete, genauer gesagt um Neodymmagnete, wobei grundsätzlich auch Elektromagneten verwendet werden können. Zusätzlich oder alternativ können die Räder 4, auch wenn es vorliegend nicht dargestellt ist, an ihrer Außenumfangsfläche mit einer silikonbasierten Haftfilmbeschichtung versehen sein, die eine mikrostrukturelle Oberfläche aufweist. Jedes Rad 4 ist durch einen separaten, als Nabenantrieb ausgebildeten Antrieb 6 unabhängig von den anderen Rädern 4 drehend antreibbar. Entsprechend lässt sich die Bewegungsrichtung der Glieder 2 ohne weiteres ändern, indem einander gegenüber angeordnete Räder 4 mit unterschiedlichen Drehzahlen angetrieben werden, was der Inspektionseinrichtung 1 eine besonders gute Wendigkeit verleiht. Das vorderste erste Glied 2 der Inspektionseinrichtung 1 ist mit einer Inspektionstechnik 7, das zweite Glied 2 mit einer Bearbeitungseinrichtung 8 und das dritte Glied 2 mit einer Reinigungseinrichtung 9 ausgestattet. Die Inspektionstechnik 7 umfasst vorliegend mehrere in unterschiedliche Richtungen ausgerichtete Kameras 10 und Beleuchtungseinheiten 11. Die Bearbeitungseinrichtung 8 ist als Klebemitteldosiereinheit ausgeführt, mit der Raupen aus Klebe- oder Abdichtungsmitteln auf einen Untergrund aufgetragen werden können, auf dem sich die Inspektionseinrichtung 1 bewegt. Die Reinigungseinrichtung 9 ist dazu ausgelegt, ein Reinigungsmittel gezielt abzugeben und auf dem Untergrund zu verteilen. An dieser Stelle sei darauf hingewiesen, dass auf die Bearbeitungseinrichtung 8 und auf die Reinigungseinrichtung 9 grundsätzlich verzichtet werden kann. Auch können in einzelnen Glieder 2 andere Arten von Bearbeitungseinrichtungen 8 und/oder Reinigungseinrichtungen 9 integriert werden. So kann als Bearbeitungseinrichtung 8 beispielsweise auch ein Miniaturfräskopf vorgesehen werden. Zumindest eine Inspektionstechnik 7 ist obligatorisch, wobei jedoch die Art der Inspektionstechnik 7 variiert werden kann. So kann die Inspektionstechnik 7 alternativ oder zusätzlich zu Kameras 10 auch ein Mikroskop und/oder einen Ultraschallmesskopf und/oder einen Wirbelstrommesskopf oder Kombinationen von diesen aufweisen.

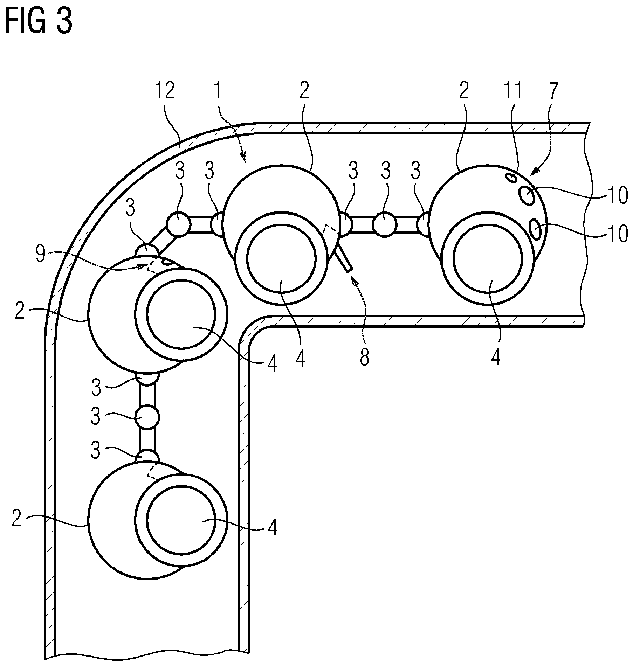

Figur 3 zeigt die Inspektionseinrichtung 1 beim Durchfahren eines metallischen Rohrleitungsabschnitts 12, der aus der Vertikalen in die Horizontale gebogen ist, wobei sich die Inspektionseinrichtung in der Biegung befindet. Für die Inspektionseinrichtung 1 stellt weder die Befahrung des vertikalen Bereiches des Rohrleitungsabschnitts ein Problem dar, da die Räder 4 mit den Magneten 5 versehen sind, noch die Vertikal-Horizontal-Richtungsänderung, da sie aufgrund der gelenkig miteinander verbundenen Glieder 2 eine ausreichende Beweglichkeit aufweist. Sind die Räder mit einer Haftfilmbeschichtung versehen, so wird auch bei nicht magnetischen Untergründen eine maximale Steigfähigkeit gewährleistet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Inspektionseinrichtung (1),
die zum Inspizieren von für den Menschen unzugänglichen Bereichen von Maschinen und/oder Anlagekomponenten und/oder Rohrleitungssystemen ausgelegt ist,
umfassend
zumindest drei aufeinanderfolgende Glieder (2),
die jeweils über zumindest eine Gelenkverbindung (3) aneinander befestigt sind,
wobei jedes Glied (2) mit zumindest zwei Rädern (4) versehen ist,
Antriebe (6) vorgesehen sind,
welche die Räder (4) von zumindest zwei Gliedern (2) drehend antreiben, und
zumindest ein Glied (2) wenigstens eine Inspektionstechnik (7) aufweist,
wobei es sich bei den Antrieben (6) um elektrische Nabenantriebe handelt,
welche die angetriebenen Räder direkt antreiben,
wobei die Bewegungsrichtung zumindest des ersten Glieds (2) und des letzten Glieds (2) steuerbar ist,
und wobei die Räder (4),
bevorzugt sämtliche Räder (4),
an ihrer Außenumfangsfläche mit Magneten (5) versehen sind, die insbesondere umfänglich gleichmäßig verteilt angeordnet sind.

2. Inspektionseinrichtung (1) nach Anspruch 1,
**dadurch gekennzeichnet, dass**
es sich bei den Gelenkverbindungen (3) um Kugelgelenke handelt.
**dadurch gekennzeichnet, dass**

3. Inspektionseinrichtung (1) nach Anspruch 1,
**dadurch gekennzeichnet, dass**
es sich bei den Magneten (5) Permanentmagnete, insbesondere Neodymmagnete, und/oder um Elektromagnete handelt.

4. Inspektionseinrichtung (1) nach einem der vorherigen Ansprüche,
**dadurch gekennzeichnet, dass**
Räder (4), bevorzugt sämtliche Räder (4), an ihrer Außenumfangsfläche mit einer silikonbasierten Haftfilmbeschichtung versehen sind, die eine mikrostrukturelle Oberfläche aufweist.

5. Inspektionseinrichtung (1) nach einem der vorhergehenden Ansprüche,
**dadurch gekennzeichnet, dass**
die wenigstens eine Inspektionstechnik (7) eine Kamera (10), ein Mikroskop, einen Ultraschallmesskopf, einen Wirbelstrommesskopf oder Kombinationen von diesen aufweist.

6. Inspektionseinrichtung (1) nach einem der vorhergehenden Ansprüche,
**dadurch gekennzeichnet, dass**
zumindest ein Glied (2) wenigstens eine Reinigungseinrichtung (9) aufweist.

7. Inspektionseinrichtung (1) nach einem der vorhergehenden Ansprüche,
**dadurch gekennzeichnet, dass**
zumindest ein Glied (2) wenigstens eine Reparatur- und/oder Bearbeitungseinrichtung (8) aufweist.

8. Inspektionseinrichtung (1) nach einem der vorhergehenden Ansprüche,
**dadurch gekennzeichnet, dass**
die einzelnen Glieder (2) eine kugelartige Form aufweisen.

## Claims

1. An inspection device (1) designed for inspecting areas of machines and/or system components and/or pipeline systems that are inaccessible to humans, comprising at least three successive links (2), each of which is fastened to one another via at least one articulated connection (3), wherein each link (2) is provided with at least two wheels (4), drives (6) are provided which rotationally drive the wheels (4) of at least two links (2), and at least one link (2) has at least one inspection means (7), wherein the drives (6) are electric hub drives which directly drive the driven wheels, wherein the direction of movement of at least the first link (2) and the last link (2) is controllable, and wherein the wheels (4), preferably all of the wheels (4), are provided on their outer circumferential surface with magnets (5), which are arranged so as to be uniformly distributed in particular around the circumference.

2. The inspection device (1) according to claim 1, **characterized in that** the articulated connections (3) are ball joints.
**characterized in that**

3. The inspection device (1) according to claim 1, **characterized in that** the magnets (5) are permanent magnets, in particular neodymium magnets, and/or electromagnets.

4. The inspection device (1) according to any one of the preceding claims, **characterized in that** wheels (4), preferably all wheels (4), are provided on their outer circumferential surface with a silicone-based adhesive film coating which has a microstructural surface.

5. The inspection device (1) according to any one of the preceding claims, **characterized in that** the at least one inspection means (7) comprises a camera (10), a microscope, an ultrasonic measuring head, an eddy current measuring head, or combinations thereof.

6. The inspection device (1) according to any one of the preceding claims, **characterized in that** at least one link (2) has at least one cleaning device (9).

7. The inspection device (1) according to any one of the preceding claims, **characterized in that** at least one link (2) has at least one repair and/or processing device (8).

8. The inspection device (1) according to any one of the preceding claims, **characterized in that** the individual links (2) have a spherical shape.

## Revendications

1. Equipement d'inspection (1), conçu pour inspecter des zones de machines et/ou de composants d'installation et/ou de systèmes de tuyauterie inaccessibles aux personnes, comprenant au moins trois éléments consécutifs (2) qui sont fixés les uns aux autres respectivement par au moins un joint articulé (3), dans lequel chaque élément (2) est pourvu d'au moins deux roues (4), des dispositifs d'entraînement (6) sont prévus qui entraînent en rotation les roues (4) d'au moins deux éléments (2), et au moins un élément (2) présente au moins un dispositif de technique d'inspection (7), dans lequel les dispositifs d'entraînement (6) sont des dispositifs d'entraînement sur moyeu électriques qui entraînent directement les roues entraînées, dans lequel la direction de mouvement au moins du premier élément (2) et du dernier élément (2) peut être commandée, et dans lequel les roues (4), de préférence toutes les roues (4), sont pourvues sur leur surface circonférentielle extérieure d'aimants (5) qui sont disposés en particulier en étant répartis régulièrement en circonférence.

2. Equipement d'inspection (1) selon la revendication 1, **caractérisé en ce que** les joints articulés (3) sont des joints à rotule.
caractérisé en ce

3. Equipement d'inspection (1) selon la revendication 1, **caractérisé en ce que** les aimants (5) sont des aimants permanents, en particulier des aimants au néodyme et/ou des électroaimants.

4. Equipement d'inspection (1) selon l'une quelconque des revendications précédentes, **caractérisé en ce que** les roues (4), de préférence toutes les roues (4), sont pourvues sur leur surface circonférentielle extérieure d'un revêtement de film adhésif à base de silicone présentant une surface microstructurelle.

5. Equipement d'inspection (1) selon l'une quelconque des revendications précédentes, **caractérisé en ce que** ledit au moins un dispositif de technique d'inspection (7) présente une caméra (10), un microscope, une tête de mesure à ultrasons, une tête de mesure à courants de Foucault ou des combinaisons de ceux-ci.

6. Equipement d'inspection (1) selon l'une quelconque des revendications précédentes, **caractérisé en ce qu'**au moins un élément (2) présente au moins un équipement de nettoyage (9).

7. Equipement d'inspection (1) selon l'une quelconque des revendications précédentes, **caractérisé en ce qu'**au moins un élément (2) présente au moins un équipement de réparation et/ou de traitement (8).

8. Equipement d'inspection (1) selon l'une quelconque des revendications précédentes, **caractérisé en ce que** les éléments (2) individuels présentent une forme sphérique.
